# EUROPÄISCHE PATENTANMELDUNG

(11) **EP 1 184 115 A1**
(43) Veröffentlichungstag der Anmeldung: **06.03.2002**
(21) Anmeldenummer: 01810807.6
(22) Anmeldetag: 20.08.2001
(51) Int. Cl.: B23B 51/02, E21B 10/44

(54) **Gesteinsbohrer**

(30) Priorität: 04.09.2000 DE 10043417
(71) Anmelder: HILTI Aktiengesellschaft, 9494 Schaan (LI)
(72) Erfinder: Eichhorn, Jörg, 80935 München (DE); Geiger, Harald, 86932 Pürgen (DE)
(74) Vertreter: Wildi, Roland

(57) **Zusammenfassung**

Ein Gesteinsbohrer (1) mit einem wendelförmigen Wendelgang (2) und einem Hartstoffeinsatz (9), welcher eine Führungskante (6) ausbildet, dadurch gekennzeichnet, dass die Führungskante (6) einen spitzen Winkel (α) zur Richtung der Werkzeugachse (A) ausbildet. Die Hartstoffplatte (9) ist mit ihrer, der Bohrrichtung abgewandten, Seitenfläche (8) an dem restlichen Werkzeug befestigt, wodurch die andere, freie Seitenfläche (11) glatt in den stark abrasiv beanspruchten Endbereich der Wendelnuten (12) integriert ist.

## Beschreibung

Die Erfindung bezeichnet einen Gesteinsbohrer zur abrasiven Bearbeitung von Gestein oder gesteinsähnlichem Material durch eine bezüglich der Bohrerachse zumindest teilweise drehende und schlagende Bewegung mit einem wendelförmigen Wendelgang und einem Hartstoffeinsatz.

Übliche Gesteinsbohrer weisen einen als Hartstoffplatte oder als Vollhartstoffkopf ausgebildeten, Hartstoffeinsatz auf, der im Werkzeugkopf befestigt ist, an welchen sich ein Schaft mit einem wendelförmigen Wendelgang anschliesst, welcher schliesslich in einem Einsteckbereich zur Aufnahme in einem Werkzeuggerät endet.

Zur radialen Führung des Bohrers im Bohrloch, zur Verringerung von Vibrationen und zur Erzeugung annähernd kreisrunder Bohrlöcher weisen Gesteinsbohrer mit Durchmessern von ca. 5 mm zusätzlich zu den Hauptschneiden im Winkel versetzt angeordnete Nebenschneiden auf. Zumeist verfügen sowohl die Hauptschneiden als auch die Nebenschneiden über umfänglich angeordnete, stumpfe Führungskanten, welche den Werkzeugkopf führen, indem sie an dem Bohrlochinnenmantel vorbei gleiten. Derartige, Reibung verursachende, Führungskanten werden möglichst klein dimensioniert.

Nach der US5553682 weist ein Gesteinsbohrer einen Hartstoffvollkopf mit je zwei Haupt- und zwei Nebenschneiden auf, deren umfängliche, jeweils parallel zur Bohrerachse verlaufende, stumpfe Führungskanten in die viergängigen Wendelgänge einmünden. Nachteilig ist der nur kleine, mit der Führungskante je Schneide geführte, Führungssektorbereich in der Querschnittsebene.

Nach der DE602663 weist ein Wendelbohrer zur spanenden Materialbearbeitung einen Werkzeugkopf mit zwei Hartstoffplatten auf, welche die Hauptschneiden bilden und deren umfänglich angeordnete, stumpfe Führungskanten in die viergängigen Wendelgänge einmünden. Dabei sind die einzelnen Hartstoffplatten, deren Führungskanten die Wendelgänge glatt fortsetzen, zur Bohrerachse geneigt angeordnet und nur mit jeweils einer, der Bohrrichtung zugewandten, Seitenfläche am Werkzeugkopf befestigt, wodurch die andere, freie Seitenfläche in den stark spanend beanspruchten Endbereich der Wendelnuten integriert ist. Eine axial schlagende Beanspruchung eines derartigen Hartstoffeinsatzes würde dessen Befestigung mit dem Werkzeugkopf auf Zug beanspruchen und somit nach kurzer Zeit versagen.

Die Aufgabe der Erfindung besteht in der Realisierung eines Gesteinsbohrers mit einem grossen Führungssektorbereich in der Querschnittsebene.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird bei einem Gesteinsbohrer mit einem wendelförmigen Wendelgang und einem Hartstoffeinsatz, dessen Befestigung mit dem restlichen Werkzeug auf eine zumindest teilweise drehende und schlagende Beanspruchung ausgelegt ist, zumindest eine Führungskante eines Hartstoffeinsatzes in einem spitzen Winkel zur Richtung der Werkzeugachse angeordnet.

Dadurch wird ohne eine Vergrösserung der reibenden Seitenfläche der Führungskante der Führungssektorbereich in der Querschnittsebene etwa entsprechend dem Sinus des Winkels vergrössert.

Die Befestigung des Hartstoffeinsatzes erfolgt nur über entgegen der Bohrrichtung oder senkrecht dazu orientierte Flächen des Hartstoffeinsatzes und somit ausschliesslich auf Druck- und Scherbeanspruchung, welche bei Schlagbeanspruchung nicht versagen.

Die Führungskante setzt vorteilhaft den Wendelgang glatt fort, wodurch der Förderwiderstand des abgetragenen Materials in der Wendelnut verringert wird.

In einer ersten vorteilhaften Variante weist der Gesteinsbohrer einen Vollhartstoffkopf auf, welcher mit seinen der Bohrrichtung abgewandten oder senkrecht dazu orientierten Flächen befestigt ist. Die Führungskante zumindest eines Hartstoffeinsatzes bildet mit der Richtung der Werkzeugachse einen spitzen Winkel aus.

In einer zweiten vorteilhaften Variante weist der Gesteinsbohrer eine Hartstoffplatte auf, welche mit ihren der Bohrrichtung abgewandten oder senkrecht dazu orientierten Flächen befestigt ist. Die Führungskante zumindest eines Hartstoffeinsatzes bildet mit der Richtung der Werkzeugachse einen spitzen Winkel aus.

Vorteilhaft ist eine Hartstoffplatte nur mit jeweils einer, der Bohrrichtung abgewandten, Seitenfläche an dem restlichen Werkzeug befestigt, wobei weiter vorteilhaft die andere, freie Seitenfläche glatt in den stark abrasiv beanspruchten Endbereich der Wendelnuten integriert ist.

Mit der erfinderischen Lösung ist ein grosser hartstoffbestückter Führungssektorbereich in der Querschnittsebene mit einem geringen Volumen von Hartstoff verschleissfest realisierbar.

Der durch die schräge Führungskante nicht mehr prismatische Vollhartstoffkopf wird vorteilhaft im Spritzgussverfahren hergestellt.

Die Erfindung wird bezüglich eines vorteilhaften Ausführungsbeispiels näher erläutert mit:
Fig. 1 als ein erster Gesteinsbohrer
Fig. 2 als ein zweiter Gesteinsbohrer

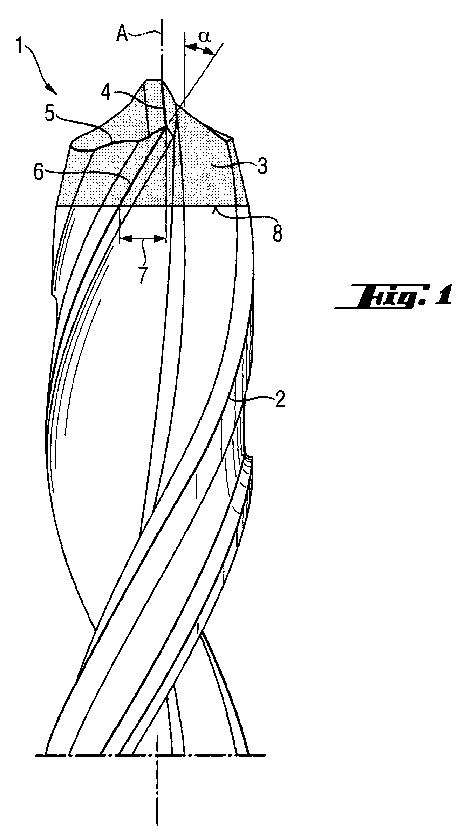

Nach Fig. 1 weist ein Gesteinsbohrer 1 mit einem viergängigen wendelförmigen Wendelgang 2 einen Vollhartstoffkopf 3 auf, welcher zwei Hauptschneiden 4 und zwei Nebenschneiden 5 aufweist. Eine umfänglich verlaufende Führungskante 6 der Hauptschneide 4 des Vollhartstoffkopfes 3 bildet einen spitzen Winkel α zur Richtung der Werkzeugachse A, wodurch bezüglich einer parallelen Orientierung eine Vergrösserung eines Führungssektorbereiches 7 in der Querschnittsebene erzielt wird. Der Vollhartstoffkopf 3 ist mit seiner, der Bohrrichtung abgewandten, Seitenfläche 8 an dem restlichen Werkzeug befestigt. Die Führungskante 6 setzt den Wendelgang 2 glatt fort.

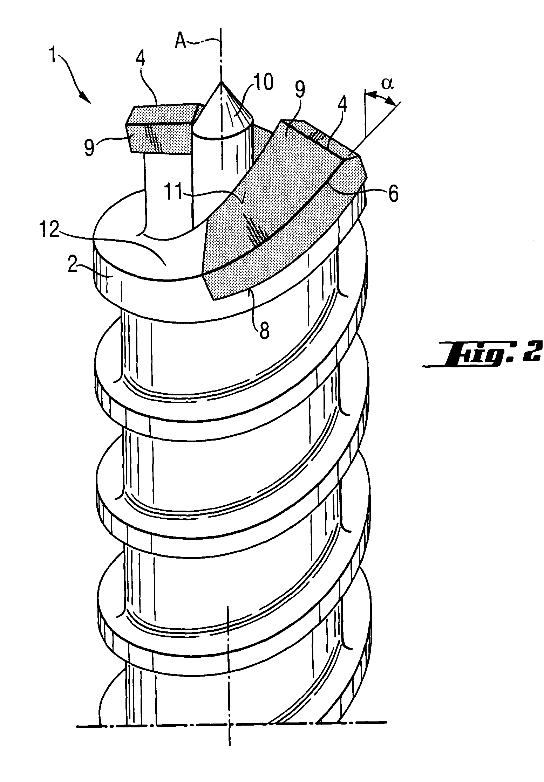

Nach Fig. 2 weist ein Gesteinsbohrer 1 mit einem zweigängigen wendelförmigen Wendelgang 2 zwei Hartstoffplatten 9 auf, welche zwei, radial um eine Zentrierschneide 10 herum angeordnete, Hauptschneiden 4 ausbilden. Die umfänglich verlaufende Führungskante 6 einer Hauptschneide 4 bildet einen spitzen Winkel α zur Richtung der Werkzeugachse A aus und setzt den Wendelgang 2 glatt fort. Die Hartstoffplatte 9 ist mit ihrer, der Bohrrichtung abgewandten, Seitenfläche 8 an dem restlichen Werkzeug befestigt, wodurch die andere, freie Seitenfläche 11 glatt in den stark abrasiv beanspruchten Endbereich der Wendelnuten 12 integriert ist.

## Patentansprüche

1. Gesteinsbohrer mit zumindest einem wendelförmigen Wendelgang (2) und wenigstens einem, auf eine zumindest teilweise drehende und schlagende Beanspruchung ausgelegten, Hartstoffeinsatz (3, 9), welcher wenigstens eine Führungskante (6) ausbildet, **dadurch gekennzeichnet, dass** die Führungskante (6) einen spitzen Winkel (α) zur Richtung der Werkzeugachse (A) ausbildet.

2. Gesteinsbohrer nach Anspruch 1, **dadurch gekennzeichnet, dass** die Befestigung des Hartstoffeinsatzes (3, 9) nur über seine der Bohrrichtung abgewandte oder senkrecht dazu orientierte Seitenfläche (8) erfolgt.

3. Gesteinsbohrer nach Anspruch 1 oder Anspruch 2, **dadurch gekennzeichnet, dass** der Führungskante (6) den Wendelgang (2) glatt fortsetzt.

4. Gesteinsbohrer nach einem der vorherigen Ansprüche, **dadurch gekennzeichnet, dass** der Hartstoffeinsatz (3, 9) als Vollhartstoffkopf (3) ausgeführt ist.

5. Gesteinsbohrer nach einem der Ansprüche 1 bis 3, **dadurch gekennzeichnet, dass** die Hartstoffeinsatz (3, 9) als Hartstoffplatte (9) ausgeführt ist.

6. Gesteinsbohrer nach Anspruch 5, **dadurch gekennzeichnet, dass** die Hartstoffplatte (9) nur mit ihrer, der Bohrrichtung abgewandten, Seitenfläche (8) an dem restlichen Werkzeug befestigt ist.

7. Gesteinsbohrer nach Anspruch 6, **dadurch gekennzeichnet, dass** die freie Seitenfläche (11) glatt in den Endbereich der Wendelnut (12) integriert ist.
